# EUROPEAN PATENT APPLICATION

(11) **EP 4 216 474 A1**
(43) Date of publication of application: **26.07.2023**
(21) Application number: 20953606.9
(22) Date of filing: 16.09.2020
(51) Int. Cl.: H04L 5/00, H04W 4/12

(54) **INFORMATION NOTIFICATION METHOD, INFORMATION RECEPTION METHOD, APPARATUS, DEVICE, AND STORAGE MEDIUM**

(71) Applicant: Beijing Xiaomi Mobile Software Co., Ltd., Beijing 100085 (CN)
(72) Inventor: LIU, Yang, Beijing 100085 (CN)
(74) Representative: Hughes, Andrea Michelle
(86) International application number: PCT/CN2020/115704
(87) International publication number: WO 2022/056748

(57) **Abstract**

Disclosed are an information notification method, information reception method, apparatus, device, and storage medium, relating to the technical field of communications; the method is applied to a network device, and the method comprises: sending notification information to a first terminal, said notification information being used for notifying of a change in the transmission status of a reference signal, or used for notifying of the transmission status of said reference signal; said first terminal is in an idle or inactive state, said first terminal shares the reference signal of a second terminal, said second terminal being at least one terminal in a connected state.

## Description

### TECHNICAL FIELD

The present disclosure relates to a field of communications technologies, and particularly to a method and an apparatus for information notification, a method and an apparatus for receiving information, a device and a storage medium.

### BACKGROUND

In a communication standard, different types of reference signals are defined to achieve different functions.

In the related art, a reference signal is configured by a network device for a terminal in a connected state.

### SUMMARY

A method and an apparatus for information notification, a method and an apparatus for receiving information, a device and a storage medium are provided in embodiments of the present disclosure. A network device sends notification information, a first terminal correspondingly receives the notification information and learns whether to send a reference signal. The technical solution is as follow:

According to one aspect of the present disclosure, a method for information notification is provided, and applicable to a network device.

The method includes: sending notification information to a first terminal, in which the notification information is configured to notify a change in a sending state of a reference signal, or notify the sending state of the reference signal.

The first terminal is in an idle state or in an inactive state, the first terminal shares the reference signal of a second terminal, and the second terminal is at least one terminal in a connected state.

According to one aspect of the present disclosure, a method for receiving information is provided, and applicable to a first terminal in an idle state or in an inactive state, in which the first terminal shares a reference signal of a second terminal, and the second terminal is at least one terminal in a connected state.

The method includes: receiving notification information, in which the notification information is configured to notify a change in a sending state of the reference signal, or notify the sending state of the reference signal.

According to one aspect of the present disclosure, an apparatus for receiving information is provided, and applicable to a first terminal in an idle state or in an inactive state, in which the first terminal shares a reference signal of a second terminal, and the second terminal is at least one terminal in a connected state. The apparatus includes a receiving module.

The receiving module is configured to receive notification information, in which the notification information is configured to notify a change in a sending state of the reference signal, or notify the sending state of the reference signal.

According to one aspect of the present disclosure, an apparatus for information notification is provided, and applicable to a network device. The apparatus includes a sending module.

The sending module is configured to send notification information to a first terminal, in which the notification information is configured to notify a change in a sending state of a reference signal, or notify the sending state of the reference signal.

The first terminal is in an idle state or in an inactive state, the first terminal shares the reference signal of a second terminal, and the second terminal is at least one terminal in a connected state.

According to one aspect of the present disclosure, a first terminal is provided, which includes: a processor; a transceiver connected to the processor; and a memory configured to store instructions executable by the processor. The processor is configured to load and execute the executable instructions to implement the method for receiving information as described in the above aspect.

According to one aspect of the present disclosure, a network device is provided, which includes: a processor; a transceiver connected to the processor; and a memory configured to store instructions executable by the processor. The processor is configured to load and execute the executable instructions to implement the method for information notification as described in the above aspect.

According to another aspect of the present disclosure, a chip is provided, which includes a programmable logic circuit and/or a program instruction. When the chip is running, the chip is configured to implement the method for receiving information or the method for information notification as described above.

According to one aspect of the present disclosure, a computer-readable storage medium stored with executable instructions is provided, in which the executable instructions are loaded and executed by a processor to implement the method for receiving information or the method for information notification as described in the above aspect.

According to one aspect of embodiments of the present disclosure, a computer program product is provided. The computer program product includes computer instructions stored in a computer-readable storage medium. A processor of a computer device reads the computer instructions from the computer-readable storage medium, and the processor executes the computer instructions to cause the computer device to perform the method for receiving information or the method for information notification as described in the above aspect.

The technical solution according to embodiments of the present disclosure may at least include the following beneficial effect:

a first terminal in an idle state or in an inactive state shares a reference signal of a second terminal in a connected state, and a network device sends notification information, in which the notification information is configured to notify a change in a sending state of the reference signal, or notify the sending state of the reference signal, the first terminal correspondingly receives the notification information and learns whether the reference signal is sent or not, which improves the accuracy of information interaction in a communication system.

### BRIEF DESCRIPTION OF THE DRAWINGS

In order to explain the technical solutions in embodiments of the present disclosure more clearly, the drawings described in the embodiments may be briefly introduced below. Obviously, the drawings described as below are only some embodiments of the present disclosure. Those skilled in the art may obtain other drawings from these drawings without creative work.
FIG. 1 is a block diagram illustrating a communication system according to an exemplary embodiment of the disclosure.
FIG. 2 is a flowchart illustrating a method for receiving information according to an exemplary embodiment of the disclosure.
FIG. 3 is a flowchart illustrating a method for receiving information according to an exemplary embodiment of the disclosure.
FIG. 4 is a block diagram illustrating an apparatus for receiving information according to an exemplary embodiment of the disclosure.
FIG. 5 is a block diagram illustrating an apparatus for information notification according to an exemplary embodiment of the disclosure.
FIG. 6 is a block diagram illustrating a communication device according to an exemplary embodiment of the disclosure.

### DETAILED DESCRIPTION

In order to make the purpose, technical solutions and advantages of the present disclosure clearer, the embodiments of the present disclosure may be further described below in connection with the accompanying drawings.

Terms and implementation environments involved in the embodiments of the disclosure are briefly introduced first, before a method for receiving information and a method for information notification in the embodiments of the disclosure are described.

### 1. Radio Resource Control (RRC) State

A terminal in a communication system may be in any one of three RRC states. The three RRC states are briefly introduced below.

RRC_IDLE state (that is, an idle state): mobility in the RRC_IDLE state is based on cell selection and reselection of the terminal, paging is initiated by a core network (CN), and a paging area is configured by the CN. There is no LTE access context on a network device side. There is no RRC connection.

RRC_CONNECTED state (that is, a connected state): there is an RRC connection, and there is a LTE access context at the network device and at the terminal. The network device side knows that a position of the terminal is a specific cell level. Mobility is the one controlled by the network device side. Unicast data may be transmitted between the terminal and the network device.

RRC_INACTIVE state (that is, an inactive state): it is a new RRC state defined in a 5G network environment in order to reduce a radio signaling, quickly recover a wireless connection and quickly recover a data service. Mobility in the RRC_INACTIVE state is based on the cell selection and reselection of the terminal, there are a connection between CN-NR and a UE access context exists on a certain network device, paging is triggered by a radio access network (RAN), a RAN-based paging area is managed by the RAN, and the network device side knows that the position of the terminal is a RAN-based paging area level.

In the embodiments of the present disclosure, the first terminal is a terminal in the idle state or in the inactive state.

A synchronization behavior of the terminal in the idle state or in the inactive state may be divided into two situations:
1) When a cell channel quality is good, the first terminal only needs to wake up before a synchronization signal block (SSB) closest to a paging occasion (PO), perform time calibration by means of a synchronization signal of one SSB (such as a primary synchronization signal and a secondary synchronization signal), and receive paging.
2) When the cell channel quality is not good, the first terminal may need to synchronize by means of more than one SSB. The first terminal needs to wake up before the more than one SSB, perform time calibration by means of synchronization signals of the more than one SSB (such as a primary synchronization signal and a secondary synchronization signal), and receive paging, resulting in an increased power consumption.

In addition, when the cell channel quality is not good, a mechanism for repeatedly sending the PO may be introduced, especially for a terminal with enhanced features, such as a Reduced Capabilities (RedCap) terminal. Furthermore, when the cell channel quality is not good, it also needs to perform signal measurement of the cell, and to measure a reference signal received power (RSRP) intensity of the SSB in the cell for a certain number of times within a certain time.

Based on the introduction of the behavior of the first terminal, when the cell channel quality is not good, a power consumption of the first terminal is high, and there is a large optimization space.

### 2. Reference Signal

There are a variety of reference signals in a communication system, which may be referred to as pilots. The reference signals have their own functions.

The reference signals in the embodiments of the present disclosure have functions such as time-frequency synchronization and automatic gain control (AGC) adjustment. The reference signals include but not limited to a channel state information reference signal (CSI-RS) and a tracking reference signal (TRS).

The CSI-RS is a channel state reference signal introduced earlier in the communication standard and may be configured for channel demodulation. The TRS is a special reference signal for timing tracking introduced in a new radio (NR).

### 3. Paging

In a communication system, when a network device needs to page a terminal, paging downlink control information (Paging DCI) may be sent in a physical downlink control channel (PDCCH). When the terminal detects the Paging DCI in the PDCCH, a paging message in a physical downlink shared channel (PDSCH) may be detected. When the paging message includes a UE identity (ID) of the terminal, it is determined that the terminal itself is paged. When the paging message does not include the UE ID of the terminal, it is determined that the terminal itself is not paged.

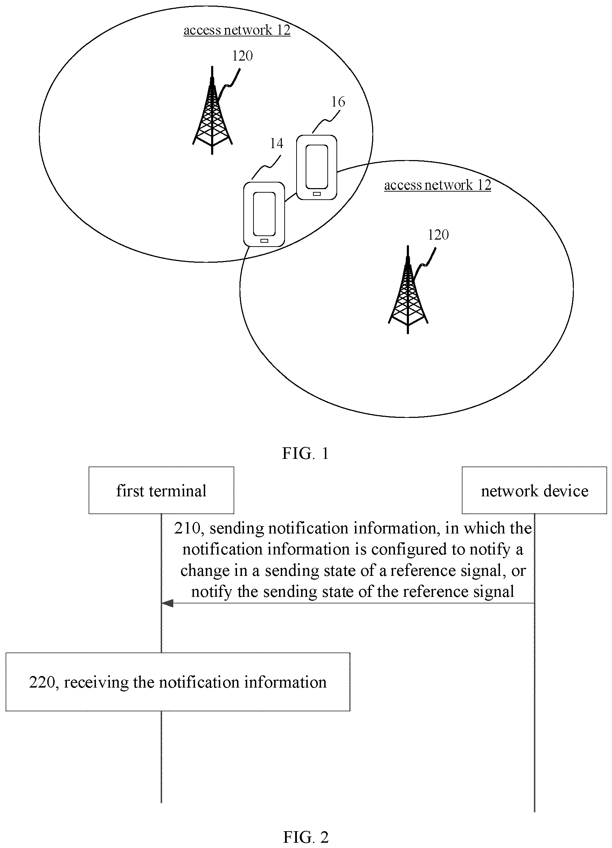

FIG. 1 is a block diagram illustrating a communication system according to an exemplary embodiment of the disclosure. The communication system may include an access network 12, a first terminal 14 and a second terminal 16.

The access network 12 includes several network devices 120. The network device 120 may be a base station, which is an apparatus deployed in an access network to provide wireless communication function for a terminal. The base station may include various forms of macro base stations, micro base stations, relay stations, access points, etc. In the system adopting different wireless access technologies, the name of the device with a base station function may vary. For example, in an LTE system, it is referred to as eNodeB or eNB; in a 5G NR system, it is referred to as gNodeB or gNB. With evolution of communication technologies, the definition of "base station" may vary. For convenience of description, in the embodiments of the present disclosure, the above apparatus that provides a wireless communication function for the first terminal 14 (or the second terminal 16) is collectively referred to as a network device.

The first terminal 14 and the second terminal 16 may include various devices with a wireless communication function, e.g., handheld devices, vehicle devices, wearable devices, computing devices or other processing devices connected to wireless modems, as well as various forms of user devices, e.g., mobile stations (MS), terminal devices, etc. For convenience of description, the device mentioned above is collectively referred to as a terminal. The network device 120 and the first terminal 14 (or the second terminal 16) communicate with each other through a certain radio interface technology, for example, a Uu interface.

The second terminal 16 is in a connected state, and the first terminal 14 is in an inactive state or an inactive state. The second terminal 16 is at least one terminal in the connected state, and the network device 120 configures a reference signal for the second terminal 16 in the connected state to use. In the embodiments of the present disclosure, the first terminal 14 in the idle state or in the inactive state may share the reference signal.

The technical solution in the embodiments of the disclosure may be applied to various communication systems, for example, a global system of mobile communication (GSM), a code division multiple access (CDMA) system, a wideband code division multiple access (WCDMA) system, a general packet radio service (GPRS), a long term evolution (LTE) system, a frequency division duplex (FDD) system, a time division duplex (TDD) system, an advanced long term evolution (LTE-A) system, a new radio (NR) system, an evolution system of the NR system, an LTE-based access to unlicensed spectrum (LTE-U) system, an NR-U system, a universal mobile telecommunication system (UMTS), a worldwide interoperability for microwave access (WiMAX) communication system, wireless local area networks (WLAN), Wireless Fidelity (WiFi), a next generation of communication system or other communication system.

Generally, a number of connections supported by a conventional communication system is limited and easy to implement. However, with the development of communication technologies, a mobile communication system not only supports conventional communication, but also supports device to device (D2D) communication, machine to machine (M2M) communication, machine type communication (MTC), vehicle to vehicle (V2V) communication, and an Internet of Vehicles (V2X) system, etc. The embodiments of the present disclosure further are applicable to these communication systems.

FIG. 2 is a flowchart illustrating a method for receiving information according to an exemplary embodiment of the disclosure. The method is applicable to the first terminal and the network device as illustrated in FIG. 1, the first terminal shares the reference signal of the second terminal, and the second terminal is a terminal in the connected state. The method includes the steps 210-220.

At step 210, a network device sends notification information. The notification information is configured to notify a change in a sending state of a reference signal, or notify the sending state of the reference signal.

The first terminal is a terminal in the idle state or the inactive state in a communication system. That is, an RRC state of the first terminal is the RRC_IDLE state or the RRC_INACTIVE state.

The reference signal is a physical signal with a certain function in a communication system. The reference signals in the embodiment of the present disclosure have functions such as time-frequency synchronization and AGC adjustment. The reference signals may be generally divided into an uplink reference signal and a downlink reference signal. The uplink reference signal refers to a reference signal sent by the first terminal to the network device, and the downlink reference signal refers to a reference signal sent by the network device to the first terminal. The reference signal in the embodiment of the present disclosure is a downlink reference signal.

The first terminal shares a reference signal of a second terminal, which means that the first terminal supports using the reference signal. The second terminal is a terminal in the connected state, and the reference signal is generally configured for the terminal in the connected state. In the embodiment of the present disclosure, the first terminal in the idle state or in the inactive state may share the reference signal of the second terminal in the connected state and use the reference signal.

In a communication system, the network device has a certain flexibility, and may change based on a sending condition of the reference signal. For example, the network device may stop sending the reference signal when the reference signal is sent for a period of time; or the network device may restart sending the reference signal when sending the reference signal is stopped.

The network device may support sending notification information to the first terminal when the sending condition of the reference signal changes. In an implementation, the notification information is configured to notify a change in the sending state of the reference signal, and the first terminal may determine the change in its own sending state based on the notification information. In another implementation, the notification information is configured to notify the sending state of the reference signal. For example, the sending state of the reference signal is that the network device sends the reference signal, or the network device does not send the reference signal. The first terminal may determine the change in the sending state of the reference signal based on a current sending state and a previous sending state.

At step 220, the first terminal receives the notification information.

The network device sends notification information to the first terminal, and the first terminal correspondingly receives the notification information, thus knowing a change in whether the reference signal is sent or not.

Optionally, after the first terminal receives the notification information, the first terminal determines, based on the content of the notification information, whether it is capable of using the reference signal subsequently. In an example, when the first terminal receives the notification information and learns that the network device does not send the reference signal, the first terminal may not perform time-frequency synchronization and AGC adjustment by using the reference signal. In another example, when the first terminal receives the notification information and learns that the network device sends the reference signal, the first terminal may perform time-frequency synchronization and AGC adjustment by using the reference signal.

In summary, according to the method of the embodiment, the first terminal in the idle state or in the inactive state shares the reference signal of the second terminal in the connected state, and the network device sends the notification information to the first terminal. The notification information is configured to notify a change in the sending state of the reference signal, or notify the sending state of the reference signal. The first terminal correspondingly receives the notification information and learns the change of whether the reference signal is sent or not, which improves the accuracy of information interaction in the communication system.

In an alternative embodiment based on FIG. 2, the change in the sending state includes: stopping sending the reference signal; or restarting sending the reference signal.

In an example, the network device stops sending the reference signal when the reference signal is sent for a period of time. When the network device may send notification information to the first terminal that indicates a change in a sending state of a reference signal, and the sending state of the reference signal is that the network device sends the reference signal before the first terminal receives the notification information, then the first terminal determines the change in the sending state is that the network device stops sending the reference signal. Alternatively, when the notification information indicates that the sending state of the reference signal is that the network device does not send the reference signal, and the notification information previously received by the first terminal indicates that the sending state of the reference signal is that the network device sends the reference signal, then the first terminal determines that the change in the sending state is that the network device stops sending the notification information.

In an example, the network device restarts sending the reference signal when sending the reference signal is stopped. When the network device sends notification information to the first terminal that indicates a change in a sending state of a reference signal, and the sending state of the reference signal is that the network device does not send the reference signal before the first terminal receives the notification information, then the first terminal determines the change in the sending state is that the network device restarts sending notification information. Alternatively, the notification information indicates that the sending state of the reference signal is that the network device sends the reference signal, and the notification information previously received by the first terminal indicates that the sending state of the reference signal is that the network device does not send the reference signal, then, the first terminal determines that the change in the sending state is that the network device restarts sending the notification information.

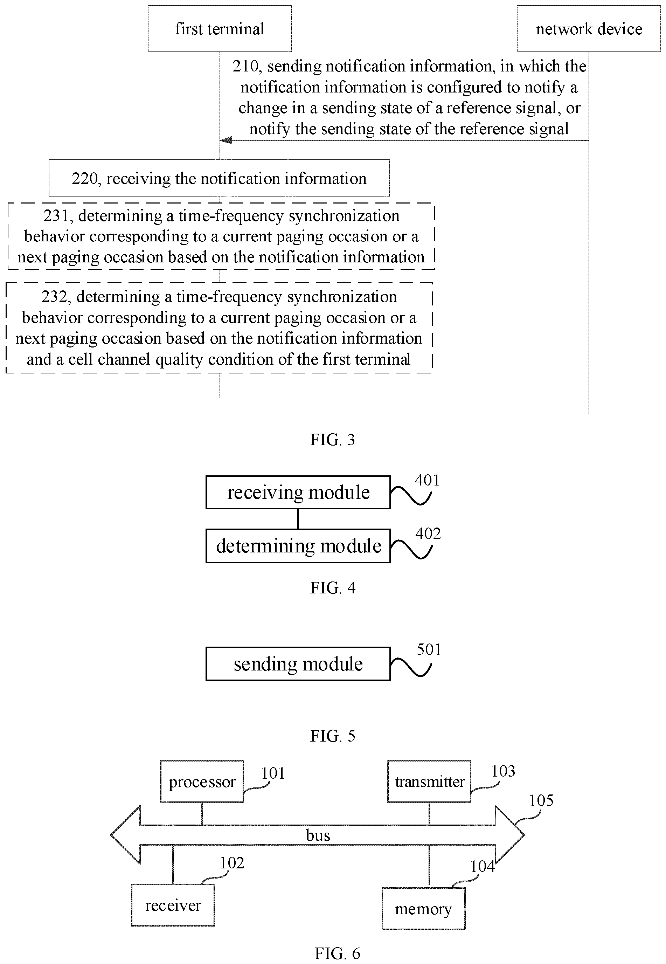

In an alternative embodiment based on FIG. 2, FIG. 3 is a flowchart illustrating a method for receiving information according to an exemplary embodiment of the disclosure. The method is applicable to the first terminal and the network device as illustrated in FIG. 1. In the embodiment, it further includes step 231 or step 232. The method includes:

At step 210, a network device sends notification information to a first terminal. The notification information is configured to notify a change in a sending state of a reference signal, or notify the sending state of the reference signal.

The first terminal shares a reference signal of a second terminal, the first terminal is a terminal in an idle state or an inactive state in a communication system, and the second terminal is a terminal in a connected state.

At step 220, the first terminal receives the notification information.

The first terminal receives the notification information sent by the network device.

At step 231, the first terminal determines a time-frequency synchronization behavior corresponding to a current paging occasion or a next paging occasion based on the notification information.

The first terminal determines the time-frequency synchronization behavior corresponding to the current paging occasion or the next paging occasion based on the content of the notification information. The time-frequency synchronization behavior includes at least one of a time synchronization behavior or a frequency synchronization behavior.

The paging occasion (PO) is a time period that the first terminal uses to detect whether a paging message exists.

In order to monitor the PO, the first terminal needs time-frequency synchronization to ensure interaction with the network device at a correct time-frequency position. Optionally, the first terminal may perform a time-frequency synchronization behavior corresponding to the current PO prior to the current PO or during the current PO.

In the related solution, the first terminal performs time-frequency synchronization by using the SSB. In an example, when the cell channel quality is good, the first terminal wakes up before the SSB closest to the OP and performs time-frequency synchronization by using one SSB; when the cell channel quality is not good (for example, the first terminal is located in an edge of the cell), the first terminal wakes up before more than one SSB, and performs time-frequency synchronization by using the more than one SSB. In the embodiment of the present disclosure, when the reference signal is available, the first terminal may perform time-frequency synchronization by using the reference signal without needing to wake up before the more than one SSB, thereby reducing a power consumption of the terminal.

In a possible implementation, the step 231 includes, the first terminal determines that time-frequency synchronization is performed by using the SSB at the current PO or the next PO, in response to determining that a network device does not send the reference signal based on the notification information.

Since the network device does not send the reference signal, the first terminal may not perform time-frequency synchronization by using the reference signal for the current PO or the next PO, and may perform synchronization only by using the SSB. It may be understood that, the first terminal may perform time-frequency synchronization by using other signals in addition to the reference signal and the SSB, which is not limited in the embodiment of the present disclosure.

In another possible implementation, the step 231 includes, the first terminal determines that time-frequency synchronization is performed by using the SSB and the reference signal at the current PO or the next PO, in response to determining that the network device sends the reference signal based on the notification information.

Since the network device sends the reference signal, the first terminal may perform time-frequency synchronization by using the reference signal for the current PO or the next PO. The first terminal performs time-frequency synchronization by using the reference signal and the SSB. It may be understood that, the first terminal may perform time-frequency synchronization by using other signals in addition to the reference signal and the SSB, which is not limited in the embodiment of the present disclosure.

At step 232, the first terminal determines a time-frequency synchronization behavior corresponding to the current paging occasion or the next paging occasion based on the notification information and the cell channel quality condition of the first terminal.

The first terminal determines a time-frequency synchronization behavior corresponding to the current paging occasion or the next paging occasion based on the cell channel quality condition of the first terminal after determining that the reference signal is available based on the notification information. The time-frequency synchronization behavior includes at least one of a time synchronization behavior or a frequency synchronization behavior.

In a possible implementation, the step 232 includes, the first terminal determines that time-frequency synchronization is performed by using a SSB at the current PO or the next PO, in response to determining that the network device does not send a reference signal based on the notification information.

Since the network device does not send the reference signal, the first terminal may not perform time-frequency synchronization by using the reference signal for the current PO or the next PO, and may perform synchronization only by using the SSB. It may be understood that, the first terminal may perform time-frequency synchronization by using other signals in addition to the reference signal and the SSB, which is not limited in the embodiment of the present disclosure.

In another possible implementation, the step 232 includes, the first terminal determines that time-frequency synchronization is performed by using the SSB at the current PO or the next PO, in response to determining that the network device sends a reference signal based on the notification information and the cell channel quality is no less than a threshold value.

In another possible implementation, the step 232 includes, the first terminal determines that time-frequency synchronization is performed by using the SSB and the reference signal at the current PO or the next PO, in response to determining that the network device sends the reference signal based on the notification information and the cell channel quality is less than the threshold value.

Since the network device sends the reference signal, the first terminal may perform time-frequency synchronization by using the reference signal for the current PO or the next PO. The first terminal further determines a cell channel quality. When the cell channel quality is not good, the first terminal may perform time-frequency synchronization by using the reference signal and the SSB; when the cell channel quality is good, the first terminal may perform time-frequency synchronization only by using the SSB. Since the first terminal only needs to wake up before one SSB when the cell channel quality is good, the power consumption of the first terminal is low. In this case, the first terminal may perform time-frequency synchronization only by using the SSB. It may be understood that, the first terminal may perform time-frequency synchronization by using other signals in addition to the reference signal and the SSB, which is not limited in the embodiment of the present disclosure.

In an example, when the cell channel quality is not good, and the first terminal determines that the network device does not send the reference signal based on the received notification information, the first terminal performs time-frequency synchronization by using three SSBs for the current PO or the next PO.

In an example, when the cell channel quality is not good, and the first terminal determines that the network device sends the reference signal based on the received notification information, the first terminal performs time-frequency synchronization by using one SSB and a reference signal for the current PO or the next PO.

In summary, according to the method of the embodiment, the first terminal in the idle state or in the inactive state shares the reference signal of the second terminal in the connected state, and the network device sends notification information to the first terminal. The notification information is configured to notify a change in the sending state of the reference signal, or notify the sending state of the reference signal, the first terminal correspondingly receives the notification information and learns the change of whether the reference signal is sent or not, which improves the accuracy of information interaction in the communication system.

In the method according to the embodiment, when the notification information indicates that the network device sends the reference signal, the first terminal may perform time-frequency synchronization by using the reference signal, without performing time-frequency synchronization based on the more than one SSB that needs to be received, which reduces a power consumption of the first terminal.

In an alternative embodiment based on FIG. 2, the notification information may be indicated by different messages or signals. In an example, with respect to the indication method of notification information, at least four solutions are provided in the embodiment of the present disclosure:

In a first solution, the network device sends paging DCI to the first terminal. An indication bit in the paging DCI is configured to indicate the sending state of the reference signal.

Correspondingly, the first terminal receives the paging DCI. The indication bit in the paging DCI is configured to indicate the sending state of the reference signal.

Optionally, the indication bit includes n bits, where n is an integer not less than 1. For example, the indication bit includes 1 bit. In an example, the value of the indication bit is "1", indicating that the sending state of the reference signal is that the network device sends the reference signal; the value of the indication bit is "0", indicating that the sending state of the reference signal is that the network device does not send the reference signal. In another example, the value of the indication bit position is "0", indicating that the sending state of the reference signal is that the network device sends the reference signal; the value of the indication bit position is "1", indicating that the sending state of the reference signal is that the network device does not send the reference signal.

Optionally, the indication bit is a reserved bit in the paging DCI, and the reserved bit is a bit in the paging DCI that is not defined with other information. Optionally, the indication bit is a new bit in the paging DCI, the new bit is a newly-added bit compared with bits in the current paging DCI. Optionally, the indication bit is a custom bit in the paging DCI, and the custom bit is a bit in the paging DCI that has been defined with other information and that is redefined again.

In an example, reference to Table 1 is made, which illustrates a short message info field in the paging DCI.

**Table 1: Short Message Info Field**

| Bit | Short Message |
|---|---|
| 1 | System Info Modification |
| 2 | Etws And Cmas Indication |
| 3-8 | Reserved Bit |

As illustrated in Table 1, the short message info field corresponds to 8 bits: 1 is a system info modification bit, the value of which is set to be 1, indicating there is a broadcast control channel (BCCH) modification in addition to a system information block (SIB) 6, a SIB 7 and a SIB 8; 2 is a system info modification bit, the value of which is set to be 1, indicating an Etws (Earthquake and Tsunami Warning System) primary indication, and/or an Etws secondary indication, and/or a Cmas (Commercial Mobile Alert System) indication; and 3-8 are reserved bits. When the short message info field is carried in the paging DCI, the indication bit may be one or more bits in the 3^{rd} - 8^{th} bits (i.e., the reserved bits), or one or more bits in the 1^{st} - 2^{nd} bits (i.e., the custom bits).

Optionally, when the indication bit in the paging DCI is used to indicate the sending state of the reference signal, the first terminal may also receive a paging message corresponding to the paging DCI, and a LTE ID is carried in the paging message. The LTE ID is identity information corresponding to a paged terminal. In an example, when the UE ID carried in the paging message includes the UE ID of the first terminal, the first terminal may initiate an RRC connection, and when the UE ID carried in the paging message does not include the UE ID of the first terminal, the first terminal may continue sleeping.

Optionally, when the indication bit in the paging DCI is used to indicate the sending state of the reference signal, the first terminal may determine a time-frequency synchronization behavior corresponding to the current PO or the next PO based on the notification information.

In an example, the indication bit in the paging DCI indicates that the network device sends a reference signal, a moment when the first terminal receives the paging DCI is denoted as T0, a moment when the first terminal receives the paging message corresponding to the paging DCI is denoted as T1, and there is an available reference signal between T0 and T1. In this case, the first terminal performs time-frequency synchronization by using the SSB and the reference signal at the current PO.

In an example, the indication bit in the paging DCI indicates that the network device sends a reference signal, a moment when the first terminal receives the paging DCI is denoted as T0, a moment when the first terminal receives the paging message corresponding to the paging DCI is denoted as T1, and there is no available reference signal between T0 and T1. In this case, the first terminal performs time-frequency synchronization by using the SSB and the reference signal at the next PO.

In a second solution, the network device sends a first paging message carrying indication information to the first terminal; or the network device sends a second paging message not carrying the indication information to the first terminal. The first paging message is configured to indicate a first sending state of the reference signal, and the second paging message is configured to indicate a second sending state of the reference signal.

Correspondingly, the first terminal receives the first paging message carrying indication information; or the first terminal receives the second paging message not carrying the indication information. The first paging message is configured to indicate the first sending state of the reference signal, and the second paging message is configured to indicate the second sending state of the reference signal.

The indication information is information in the paging message originally used to indicate content unrelated to the sending state of the reference signal. Optionally, the indication information includes a UE ID. The UE ID is identity information corresponding to the paged terminal.

In an example, the first sending state refers to that the network device sends the reference signal; and the second sending state refers to that the network device does not send the reference signal. In another example, the first sending state refers to that the network device does not send the reference signal; and the second sending state refers to that the network device sends the reference signal.

Optionally, when the network device sends a first paging message or a second paging message to the first terminal so as to indicate the sending state of the reference signal, the first terminal may determine a time-frequency synchronization behavior corresponding to the next PO based on the notification information.

In a third solution, the network device sends a third second paging message not carrying indication information to the first terminal. The third paging message is configured to indicate the change in the sending state of the reference signal.

Correspondingly, the first terminal receives the third second paging message not carrying indication information. The third paging message is configured to indicate the change in the sending state of the reference signal.

The indication information is information in the paging message originally used to indicate content unrelated to the sending state of the reference signal. Optionally, the indication information includes a UE ID. The UE ID is identity information corresponding to the paged terminal.

When the indication information is carried in the paging message, it indicates that the sending condition of the network device for the reference signal does not change; when the indication information is not carried in the paging message, it indicates that the sending condition of the network device for the reference signal has changed, for example, the network device stops sending the reference signal, or the network device restarts sending the reference signal.

Optionally, when the third second paging message not carrying indication information is configured to indicate the change in the sending state of the reference signal, the first terminal determines a time-frequency synchronization behavior corresponding to the next PO based on the notification information.

In a fourth solution, the network device sends a supplementary reference signal to the first terminal. Information in the supplementary reference signal is configured to indicate a sending state of the reference signal, and the supplementary reference signal is a signal different from the reference signal.

Correspondingly, the first terminal receives the supplementary reference signal. The information in the supplementary reference signal is configured to indicate the sending state of the reference signal, and the supplementary reference signal is a signal different from the reference signal.

Optionally, the information in the supplementary reference signal includes but not limited to a code word feature of the supplementary reference signal. In an example, when the code word feature of the supplementary reference signal is a first feature, it indicates that the sending state of the reference signal is that the network device sends the reference signal; when the code word feature of the supplementary reference signal is a second feature, it indicates that the sending state of the reference signal is that the network device does not send the reference signal.

Optionally, when the information in the supplementary reference signal is configured to indicate the sending state of the reference signal, the first terminal may determine a time-frequency synchronization behavior corresponding to the next PO.

In summary, according to the method of the embodiment, the first terminal in the idle state or in the inactive state shares the reference signal of the second terminal in the connected state, and the network device sends notification information to the first terminal. The notification information is configured to notify a change in the sending state of the reference signal, or notify the sending state of the reference signal, the first terminal correspondingly receives the notification information and learns the change of whether the reference signal is sent, which improves the accuracy of information interaction in the communication system.

In the method according to the embodiments, the network device may notify the change in the sending state of the reference signal in the first terminal, or notify the sending state of the reference signal in the first terminal by sending any one of the paging DCI, the paging message and the supplementary reference signal, which improves the flexibility of implementation of the notification information.

In an alternative embodiment based on FIG. 2, the reference signal includes at least one of a CSI-RS or a TRS.

It needs to be noted that, the above method embodiments may be implemented independently or in combination, which is not limited in the disclosure.

In each of the above embodiments, the steps executed by the first terminal may be independently implemented as a method for receiving information at the first terminal side, and the steps executed by the network device may be independently implemented as a method for information notification at the network device side.

FIG. 4 is a block diagram illustrating an apparatus for receiving information according to an exemplary embodiment of the disclosure. The apparatus is applicable to a first terminal in an idle state or in an inactive state. The first terminal shares a reference signal of a second terminal, and the second terminal is at least one terminal in a connected state. The apparatus includes a receiving module 401.

The receiving module 401 is configured to receive notification information. The notification information is configured to notify a change in a sending state of the reference signal, or notify the sending state of the reference signal.

In an alternative embodiment, the change in the sending state includes: stopping sending the reference signal.

In an alternative embodiment, the change in the sending state includes: restarting sending reference signal.

In an alternative embodiment, the apparatus further includes a determining module 402. The determining module 402 is configured to determine a time-frequency synchronization behavior corresponding to a current paging occasion or a next paging occasion based on the notification information; or the determining module 402 is configured to determine a time-frequency synchronization behavior corresponding to a current paging occasion or a next paging occasion based on the notification information and a cell channel quality condition of the first terminal.

In an alternative embodiment, the determining module 402 is configured to determine that time-frequency synchronization is performed by using a SSB at the current paging occasion or the next paging occasion, in response to determining that a network device does not send the reference signal based on the notification information; and the determining module 402 is determine that time-frequency synchronization is performed by using the SSB and the reference signal at the current paging occasion or the next paging occasion, in response to determining that the network device sends the reference signal based on the notification information. The time-frequency synchronization includes at least one of time synchronization or frequency synchronization.

In an alternative embodiment, the determining module 402 is configured to determine that time-frequency synchronization is performed by using a SSB at the current paging occasion or the next paging occasion, in response to determining that a network device does not send the reference signal based on the notification information; the determining module 402 is configured to determine that time-frequency synchronization is performed by using the SSB at the current paging occasion or the next paging occasion, in response to determining that the network device sends the reference signal based on the notification information and the cell channel quality is no less than a threshold value; and the determining module 402 is configured to determine that time-frequency synchronization is performed by using the SSB and the reference signal at the current paging occasion or the next paging occasion, in response to determining that the network device sends the reference signal based on the notification information and the cell channel quality is less than the threshold value. The time-frequency synchronization includes at least one of time synchronization or frequency synchronization.

In an alternative embodiment, the receiving module 401 is configured to receive paging DCI. An indication bit in the paging DCI is configured to indicate the sending state of the reference signal.

In an alternative embodiment, the receiving module 401 is configured to receive a paging message corresponding to the paging DCI. AUE identity is carried in the paging message.

In an alternative embodiment, the indication bit includes n bits, where n is an integer not less than 1.

In an alternative embodiment, the indication bit is a reserved bit in the paging DCI; or, the indication bit is a custom bit in the paging DCI.

In an alternative embodiment, the receiving module 401 is configured to receive a first paging message carrying indication information; or receive a second paging message not carrying the indication information. The first paging message is configured to indicate a first sending state of the reference signal, and the second paging message is configured to indicate a second sending state of the reference signal.

In an alternative embodiment, the receiving module 401 is configured to receive a third second paging message not carrying indication information. The third paging message is configured to indicate the change in the sending state of reference signal.

In an alternative embodiment, the indication information includes a UE identity.

In an alternative embodiment, the receiving module 401 is configured to receive a supplementary reference signal. Information in the supplementary reference signal is configured to indicate the sending state of reference signal, and the supplementary reference signal is a signal different from the reference signal.

In an alternative embodiment, the reference signal includes at least one of a CSI-RS or a TRS.

FIG. 5 is a block diagram illustrating an apparatus for receiving information according to an exemplary embodiment of the disclosure. The apparatus includes a sending module 501.

The sending module 501 is configured to send notification information to a first terminal. The notification information is configured to notify a change in a sending state of a reference signal, or notify the sending state of the reference signal.

The first terminal is in an idle state or in an inactive state, the first terminal shares a reference signal of a second terminal, and the second terminal is at least one terminal in a connected state.

In an alternative embodiment, the change in the sending state includes: stopping sending the reference signal.

In an alternative embodiment, the change in the sending state includes: restarting sending reference signal.

In an alternative embodiment, the sending module 501 is configured to send paging DCI to the first terminal. An indication bit in the paging DCI is configured to indicate the sending state of the reference signal.

In an alternative embodiment, the sending module 501 is configured to send a paging message corresponding to the paging DCI. AUE identity is carried in the paging message.

In an alternative embodiment, the indication bit includes n bits, where n is an integer not less than 1.

In an alternative embodiment, the indication bit is a reserved bit in the paging DCI; or, the indication bit is a custom bit in the paging DCI.

In an alternative embodiment, the sending module 501 is configured to send a first paging message carrying indication information to the first terminal; or the sending module 501 is configured to send a second paging message not carrying the indication information to the first terminal. The first paging message is configured to indicate a first sending state of the reference signal, and the second paging message is configured to indicate a second sending state of the reference signal.

In an alternative embodiment, the sending module 501 is configured to send a third paging message not carrying indication information to the first terminal. The third paging message is configured to indicate the change in the sending state of reference signal.

In an alternative embodiment, the indication information includes a UE identity.

In an alternative embodiment, the sending module 501 is configured to send a supplementary reference signal to the first terminal. Information in the supplementary reference signal is configured to indicate the sending state of reference signal, and the supplementary reference signal is a signal different from the reference signal.

In an alternative embodiment, the reference signal includes at least one of a CSI-RS or a TRS.

FIG. 6 is a schematic diagram illustrating a structure of a communication device (the first terminal or the network device) according to an exemplary embodiment of the disclosure. The communication device includes a processor 101, a receiver 102, a transmitter 103, a memory 104 and a bus 105.

The processor 101 includes one or more processing cores, and the processor 101 executes various function applications and information processing by running a software program or a module.

The receiver 102 and the transmitter 103 may be implemented as a communication component, which may be a communication chip.

The memory 104 is communicatively connected to the processor 101 through the bus 105.

The memory 104 may be configured to store at least one instruction, and the processor 101 is configured to execute the at least one instruction to implement all steps in the above embodiments.

In addition, the memory 104 may be implemented by any type of volatile or non-volatile storage devices or their combination. The volatile or non-volatile storage device includes but not limited to a magnetic disk or an optical disk, an electrically-erasable programmable read-only memory (EEPROM), an erasable programmable read-only memory (EPROM), a static random access memory (SRAM), a read-only memory (-,ROM), a magnetic memory, a flash memory and a programmable read-only memory (PROM).

A computer-readable storage medium is further provided in an exemplary embodiment, in which the computer readable storage medium stores at least one instruction, at least one program, a code set and an instruction set. The at least one instruction, the at least one program, the code set or the instruction set is loaded and executed by the processor to implement the method for receiving information or the method for information notification executed by a communication device according to each of the above method embodiments.

Those skilled in the art may understand that all or part of the steps in the above embodiments may be implemented by a hardware, or by a program to instruct relevant hardware, in which the program may be stored in the computer readable storage medium which may be a read-only memory, a magnetic disk or an optical disk, etc.

The above description is only alternative embodiments of the present disclosure, and do not constitute a limitation of the present disclosure. Any modification, equivalent replacement, improvement, etc., made within the spirit and principle of embodiments of the present disclosure shall be included within the protection scope of embodiments of the present disclosure.

## Claims

1. A method for information notification, applicable to a network device, the method comprising:
sending notification information to a first terminal, wherein the notification information is configured to notify a change in a sending state of a reference signal, or notify the sending state of the reference signal;
wherein the first terminal is in an idle state or in an inactive state, the first terminal shares the reference signal of a second terminal, and the second terminal is at least one terminal in a connected state.

2. The method of claim 1, wherein the change in the sending state comprises: stopping sending the reference signal.

3. The method of claim 1, wherein the change in the sending state comprises: restarting sending the reference signal.

4. The method of any one of claims 1 to 3, wherein sending the notification information to the first terminal comprises:
sending paging downlink control information (DCI) to the first terminal, wherein an indication bit in the paging DCI is configured to indicate the sending state of the reference signal.

5. The method of claim 4, further comprising:
sending a paging message corresponding to the paging DCI, wherein a user equipment identity is carried in the paging message.

6. The method of claim 4, wherein the indication bit comprises n bits, where n is an integer not less than 1.

7. The method of claim 4, wherein
the indication bit is a reserved bit in the paging DCI; or
the indication bit is a custom bit in the paging DCI.

8. The method of any one of claims 1 to 3, wherein sending the notification information to the first terminal comprises:
sending a first paging message carrying indication information to the first terminal; or sending a second paging message not carrying the indication information to the first terminal, wherein the first paging message is configured to indicate a first sending state of the reference signal, and the second paging message is configured to indicate a second sending state of the reference signal.

9. The method of any one of claims 1 to 3, wherein sending the notification information to the first terminal comprises:
sending a third second paging message not carrying indication information to the first terminal, wherein the third paging message is configured to indicate the change in the sending state of the reference signal.

10. The method of claim 8 or 9, wherein the indication information comprises a user equipment identity.

11. The method of any one of claims 1 to 3, wherein sending the notification information to the first terminal comprises:
sending a supplementary reference signal to the first terminal, wherein information in the supplementary reference signal is configured to indicate the sending state of the reference signal, and the supplementary reference signal is a signal different from the reference signal.

12. The method of any one of claims 1 to 11, wherein the reference signal comprises at least one of a channel state information reference signal (CSI-RS) or a tracking reference signal (TRS).

13. A method for receiving information, applicable to a first terminal in an idle state or in an inactive state, wherein the first terminal shares a reference signal of a second terminal, and the second terminal is at least one terminal in a connected state, the method comprising:
receiving notification information, wherein the notification information is configured to notify a change in a sending state of the reference signal, or notify the sending state of the reference signal.

14. The method of claim 13, wherein the change in the sending state comprises: stopping sending the reference signal.

15. The method of claim 13, wherein the change in the sending state comprises: restarting sending the reference signal.

16. The method of any one of claims 13 to 15, further comprising:
determining a time-frequency synchronization behavior corresponding to a current paging occasion or a next paging occasion based on the notification information; or
determining a time-frequency synchronization behavior corresponding to a current paging occasion or a next paging occasion based on the notification information and a cell channel quality condition of the first terminal.

17. The method of claim 16, wherein determining the time-frequency synchronization behavior corresponding to the current paging occasion or the next paging occasion based on the notification information, comprises:
determining that time-frequency synchronization is performed by using a synchronization signal block (SSB) at the current paging occasion or the next paging occasion, in response to determining that a network device does not send the reference signal based on the notification information; and
determining that time-frequency synchronization is performed by using the SSB and the reference signal at the current paging occasion or the next paging occasion, in response to determining that the network device sends the reference signal based on the notification information;
wherein the time-frequency synchronization comprises at least one of time synchronization or frequency synchronization.

18. The method of claim 16, wherein determining the time-frequency synchronization behavior corresponding to the current paging occasion or the next paging occasion based on the notification information and the cell channel quality condition of the first terminal, comprises:
determining that time-frequency synchronization is performed by using a synchronization signal block (SSB) at the current paging occasion or the next paging occasion, in response to determining that a network device does not send the reference signal based on the notification information; and
determining that time-frequency synchronization is performed by using the SSB at the current paging occasion or the next paging occasion, in response to determining that the network device sends the reference signal based on the notification information and the cell channel quality is no less than a threshold value; and
determining that time-frequency synchronization is performed by using the SSB and the reference signal at the current paging occasion or the next paging occasion, in response to determining that the network device sends the reference signal based on the notification information and the cell channel quality is less than the threshold value;
wherein the time-frequency synchronization comprises at least one of time synchronization or frequency synchronization.

19. The method of any one of claims 13 to 15, wherein receiving the notification information comprises:
receiving paging downlink control information (DCI), wherein an indication bit in the paging DCI is configured to indicate the sending state of the reference signal.

20. The method of claim 19, further comprising:
receiving a paging message corresponding to the paging DCI, wherein a user equipment (UE) identity is carried in the paging message.

21. The method of claim 19, wherein the indication bit comprises n bits, where n is an integer not less than 1.

22. The method of claim 19, wherein
the indication bit is a reserved bit in the paging DCI; or
the indication bit is a custom bit in the paging DCI.

23. The method of any one of claims 13 to 15, wherein receiving the notification information comprises:
receiving a first paging message carrying indication information; or receiving a second paging message not carrying the indication information, wherein the first paging message is configured to indicate a first sending state of the reference signal, and the second paging message is configured to indicate a second sending state of the reference signal.

24. The method of any one of claims 13 to 15, wherein receiving the notification information comprises:
receiving a third second paging message not carrying indication information, wherein the third paging message is configured to indicate the change in the sending state of the reference signal.

25. The method of claim 23 or 24, wherein the indication information comprises: a user equipment identity.

26. The method of any one of claims 13 to 15, wherein receiving the notification information comprises:
receiving a supplementary reference signal, wherein information in the supplementary reference signal is configured to indicate the sending state of the reference signal, and the supplementary reference signal is a signal different from the reference signal.

27. The method of any one of claims 13 to 15, wherein the reference signal comprises at least one of a channel state information reference signal (CSI-RS) or a tracking reference signal (TRS).

28. An apparatus for information notification, applicable to a network device, the apparatus comprising:
a sending module, configured to send notification information to a first terminal, wherein the notification information is configured to notify a change in a sending state of a reference signal, or notify the sending state of the reference signal;
wherein the first terminal is in an idle state or in an inactive state, the first terminal shares the reference signal of a second terminal, and the second terminal is at least one terminal in a connected state.

29. An apparatus for receiving information, applicable to a first terminal in an idle state or in an inactive state, wherein the first terminal shares a reference signal of a second terminal, and the second terminal is at least one terminal in a connected state, the apparatus comprising: a receiving module, configured to receive notification information, wherein the notification information is configured to notify a change in a sending state of the reference signal, or notify the sending state of the reference signal.

30. A network device, comprising:
a processor; and
a transceiver connected to the processor; and
a memory configured to store instructions executable by the processor;
wherein the processor is configured to load and execute the executable instructions to implement the method of any one of claims 1 to 12.

31. A first terminal, comprising:
a processor; and
a transceiver connected to the processor; and
a memory configured to store instructions executable by the processor;
wherein the processor is configured to load and execute the executable instructions to implement the method of any one of claims 13 to 27.

32. A chip, comprising: a programmable logic circuit and/or a program instruction, wherein when the chip is running, the chip is configured to implement the method of any one of claims 1 to 12 or the method of any one of claims 13 to 27.

33. A computer-readable storage medium stored with executable instructions, wherein the executable instructions are loaded and executed by a processor to implement the method of any one of claims 1 to 12 or the method of any one of claims 13 to 27.
